Europäisches Patentamt

European Patent Office

Office européen des brevets

(11) Veröffentlichungsnummer: **0 361 286**
**A2**

# EUROPÄISCHE PATENTANMELDUNG

(21) Anmeldenummer: 89117330.4

(22) Anmeldetag: 19.09.89

(51) Int. Cl.5: **B64C 3/28**

(30) Priorität: 28.09.88 DE 3832949

(43) Veröffentlichungstag der Anmeldung:
04.04.90 Patentblatt 90/14

(84) Benannte Vertragsstaaten:
FR GB IT

(71) Anmelder: **CLAUDIUS DORNIER SEASTAR GMBH & CO. KG**
**Flugplatz Oberpfaffenhofen**
**D-8031 Wessling(DE)**

(72) Erfinder: **Bubeck, Manfred, Dr.**
**Schwabenstrasse 19**
**D-7336 Uhingen(DE)**

(54) **Angeströmtes Bauteil von Flugkörpern.**

(57) Ein angeströmtes Bauteil von Flugkörpern, insbesondere Flügel und Leitwerke von Flugzeugen, weist eine Stützkonstruktion auf, die eine gemäß einer vorbestimmten Außenkontur gestaltete Profilhaut trägt. Die Profilhaut folgt im Anström- bzw. Nasenbereich nicht der Außenkontur, sondern läuft zur Anströmkante spitz zu. Zur Bildung der vorbestimmten Außenkontur ist die Profilhaut im Anström- bzw. Nasenbereich von einer Außenhaut überspannt. Die Außenhaut ist als abnehmbares Verkleidungsteil ausgebildet und kann infolge eines Aufpralls eines Vogels zerstört werden. Die Profilhaut weist im Anströmbereich die Form von zwei ebenen, geneigten Flächen auf, die eine entgegen der Anströmrichtung gerichtete Schneide bilden.

EP 0 361 286 A2

FIG. 2

## Angeströmtes Bauteil von Flugkörpern

Die Erfindung bezieht sich auf ein angeströmtes Bauteil von Flugkörpern, insbesondere auf Flügel oder Leitwerke eines Flugzeugs gemäß dem Oberbegriff des Anspruchs 1.

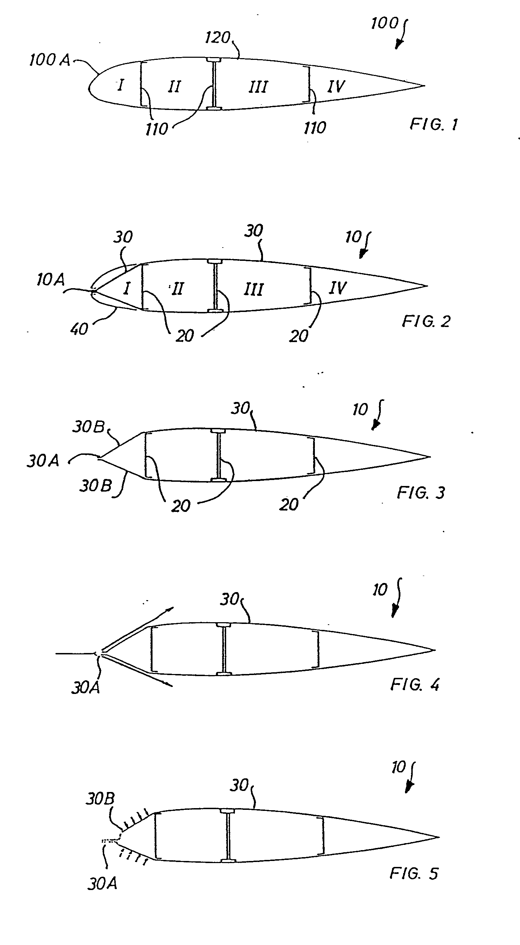

Ein herkömmliches derartiges Bauteil weist üblicherweise den in Fig. 1 dargestellten Aufbau auf. Eine Stützkonstruktion 110, die Stege und Holme umfaßt, ist mit einer Profilhaut 120 versehen, so daß das Bauteil 100 einen vorbestimmten, an strömungstechnische Anforderungen angepaßten Querschnitt aufweist. Im Anströmbereich 100A des Bauteils 100, der sogenannten Nase, ist der Querschnitt abgerundet. Durch die Stützkonstruktion 110 in Verbindung mit der Profilhaut 120 sind eine Vielzahl von kastenförmigen Querschnittsabschnitten I, II, III und IV gebildet, die eine hohe Torsionssteifigkeit aufweisen und wesentlich zur Stabilität des angeströmten Bauteils beitragen.

Durch die Verwendung zunehmend leichterer Werkstoffe und die Anwendung von hochentwickelten, komplexen Berechnungs verfahren konnte das tatsächliche Tragverhalten derartiger angeströmter Bauteile in den letzten Jahren sehr genau erfaßt werden. Dadurch war es möglich, die Stabilität der Bauteile an die erforderliche Stabilität anzunähern, wodurch früher vorhandene, rechentechnisch nicht erfaßbare Stabilitätsreserven abgebaut wurden. Eine außergewöhnliche Belastung kann deshalb sehr leicht zu einer Beschädigung des Bauteils führen.

Während des Startens und Landens von Flugzeugen und auch bei deren Tiefflug kann es zu einem sogenannten Vogelschlag kommen, wobei ein Vogel mit einem Flügel oder Leitwerk des Flugzeugs zusammenstößt. Wenn der Vogel in dem Anströmbereich 100A gemäß Fig. 1 auf das angeströmte Bauteil 100 auftrifft, kann er die Profilhaut 120 durchschlagen, wodurch der Querschnittsabschnitt I beschädigt und nicht mehr torsionssteif ist, was zu einer wesentlichen Verringerung der Stabilität des Bauteils 100 führt. Darüberhinaus ist es anschließend notwendig, die Profilhaut 120 des Bauteils 100 zu reparieren, was zeitaufwendig und kostenintensiv ist.

Der Erfindung liegt die Aufgabe zugrunde, ein angeströmtes Bauteil zu schaffen, dessen Stabilität auch bei einer außergewöhnlichen Belastung zuverlässig gewährleistet ist.

Diese Aufgabe wird erfindungsgemäß durch die Merkmale im kennzeichnenden Teil des Patentanspruchs 1 gelöst.

Erfindungsgemäß folgt die Profilhaut im Anström- bzw. Nasenbereich des Bauteils nicht der vorbestimmten, strömungstechnisch günstigen Außenkontur, sondern sie läuft spitz zu. Die Außenkontur wird dabei in diesem Bereich von einer zusätzlichen Außenhaut gebildet, die zur Stabilität des Bauteils nicht oder nur in sehr geringem Maße beiträgt. Wenn ein derartiges Bauteil beispielsweise einem Vogelschlag unterliegt, wird die Außenhaut zerstört, wodurch ein hoher Anteil der kinetischen Energie des Vogels verzehrt wird. Der die Stabilität begründende Querschnitt, der aus der Stützkonstruktion und der Profilhaut besteht, wird dabei nicht beschädigt, so daß auch bei einem Vogelschlag die Stabilität des Bauteils vollständig erhalten bleibt.

Wenn die Profilhaut gemäß den Patentansprüchen 2 und 3 mit einer in Anstromrichtung ausgerichteten Schneide und zwei ebenen, schräg verlaufenden Flächen gebildet ist, kann ein anprallender Vogel von der Schneide zerteilt und mittels der schräg verlaufenden Flächen nach oben und unten abgelenkt werden. Dadurch verbleibt ein wesentlicher Anteil der kinetischen Energie im Vogel und muß nicht von der Stützkonstruktion des angeströmten Bauteils aufgenommen werden.

Eine Ausbildung der zusätzlichen Außenhaut als abnehmbares Verkleidungsteil gemäß dem Patentanspruch 4 ermöglicht ein schnelles und kostengünstiges Auswechseln der Außenhaut für den Fall, daß diese infolge eines Vogelschlags zerstört wurde.

Weitere Ziele, Anwendungen und Vorteile der Erfindung werden aus der folgenden ausführlichen Beschreibung eines bevorzugten Ausführungsbeispiels unter Bezugnahme auf die beigefügten Zeichnungen vollständig ersichtlich.

Es zeigen:

Fig. 1 den Aufbau eines herkömmlichen angeströmten Bauteils im Querschnitt,

Fig. 2 den Aufbau eines erfindungsgemäßen angeströmten Bauteils im Querschnitt,

Fig. 3 das Bauteil gemäß Fig. 2 mit abgenommener Außenhaut,

Fig. 4 die Wirkungsweise der erfindungsgemäßen Schneide und

Fig. 5 die möglichen Verformungen des erfindungsgemäßen Bauteils infolge eines übermaßig starken Vogelschlags.

In den Fig. 2 bis 5 ist als angeströmtes Bauteil beispielhaft ein Flügel 10 eines Flugzeugs dargestellt, der eine Stützkonstruktion 20 aufweist, die Holme und Stege umfaßt. Die Stützkonstruktion 20 ist mit einer Profilhaut 30 überzogen, die in weiten Bereichen des Flügels 10 einer vorbestimmten strömungstechnisch vorteilhaften Außenkontur folgt. Im Anströmbereich, d. h. dem gemäß den Figuren linksseitigen Ende des Flügels 10, verläuft die Profilhaut 30 spitz auf eine Anströmkante 10a zu und stimmt mit der vorbestimmten Außenkontur nicht mehr überein. Auf diese Weise umfaßt die Profilhaut 30 im Anströmbereich zwei im wesentlichen ebene Flächen 30B, die in einer entgegen der Anströmrichtung gerichteten Schneide 30A zusammenlaufen. Um dem Flügel 10 auch im Anströmbereich die vorbestimmte Außenkontur zu verleihen, sind die ebenen Flächen 30B mit einer entsprechend geformten, nicht extra ausgesteiften Außenhaut 40 überspannt. Die Stabilität des Flügels 10 wird im wesentlichen durch die Stützkonstruktion 20 im Zusammenwirken mit der Profilhaut 30 bestimmt, wobei auch hierbei eine Vielzahl von kastenförmigen, torsionssteifen Querschnittsabschnitten I, II, III und IV gebildet ist, während die Außenhaut 40 zur Stabilität des Flügels 10 nicht beiträgt.

Die Außenhaut 40 ist als abnehmbares Verkleidungsteil ausgebildet, so daß ein schnelles und kostengünstiges Auswechseln der Außenhaut im Bedarfsfall möglich ist.

Wenn ein Vogel gegen den Anströmbereich des Flügels 10 prallt und auf die Außenhaut 40 auftrifft, wird diese zerstört bzw. durchschlagen, wodurch die kinetische Energie des Vogels weitgehend verzehrt ist. Wenn der Vogel auf die Anströmkante 10A aufprallt, wird er mittels der Schneide 30A zerteilt und nach oben bzw. unten abgeleitet, wie es in Fig. 40 angedeutet ist. Die Querschnittsform der Stabilitätsbegründenden Teile des Flügels 10, d. h. der Stützkonstruktion 20 und der Profilhaut 30 bleibt dabei vollständig erhalten und eine Beeinflussung bzw. Veränderung des Tragverhaltens des Flügels 10 tritt nicht auf.

In der Fig. 5 sind die möglichen Verformungen des Flügels 10 infolge eines übermäßigen Vogelschlags dargestellt. Nachdem die in Fig. 5 nicht dargestellte Außenhaut durchschlagen wurde, trifft der Vogel auf die schrägen Flächen 30B der Profilhaut 30 auf. Wenn die Profilhaut 30 aus Metall besteht, unterliegt sie im Aufprallbereich relativ starken Verformungen, wie es in Fig. 5 angedeutet ist, wodurch die Aufprallenergie weitgehend verzehrt wird. Wenn die Profilhaut 30 hingegen aus einem Kunststoff, beispielsweise einem faserverstärkten Kunststoff besteht, zerreissen infolge des Aufpralls eine Vielzahl von Fasern, was ebenfalls eine Verzehrung von Energie zur Folge hat. Eine Beschädigung des nachfolgenden Steges kann auf diese Weise vermieden werden und die Tragstruktur des Flügels 10 bleibt erhalten.

Die an den schrägen Flächen 30B vorbeigleitenden Vogelteile üben in der in Fig. 5 angedeuteten Weise Druckkräfte auf die schrägen Flächen 30B der Profilhaut 30 aus. Da diese Kräfte die schrägen Flächen 30B aufeinander zu beaufschlagen, ist ein Aufreißen und Aufplatzen der Tragstruktur des Flügels 10 zuverlässig verhindert.

Vorstehend sind nur einige Ausführungsbeispiele der Erfindung erläutert worden. Es liegt jedoch für den Fachmann auf der Hand, daß zahlreiche Änderungen und Abwandlungen ausführbar sind, ohne den Rahmen und Grundgedanken der Erfindung zu verlassen.

Die Anzahl der in Fig. 2 gezeigten kastenförmigen, torsionssteifen Querschnittsabschnitte I bis IV kann auch geringer sein und wird lediglich durch die Stabilitätsanforderungen an das angeströmte Bauteil bestimmt. In dem dargestellten Ausführungsbeispiel ist die Außenhaut als nicht ausgesteiftes Bauteil verwendet worden. Falls es für die Stabilität der Außenhaut an sich notwendig ist, kann die Außenhaut auch durch Aussteifungselemente, etwa Stege oder Rippen, in sich ausgesteift sein.

Ein angeströmtes Bauteil von Flugkörpern, insbesondere Flügel und Leitwerke von Flugzeugen, weist eine Stützkonstruktion auf, die eine gemäß einer vorbestimmten Außenkontur gestaltete Profilhaut trägt. Die Profilhaut folgt im Anström- bzw. Nasenbereich nicht der Außenkontur, sondern läuft zur Anströmkante spitz zu. Zur Bildung der vorbestimmten Außenkontur ist die Profilhaut im Anström-bzw. Nasenbereich von einer Außenhaut überspannt. Die Außenhaut ist als abnehmbares Verkleidungsteil ausgebildet und kann infolge eines Aufpralls eines Vogels zerstört werden. Die Profilhaut weist im Anströmbereich die Form von zwei ebenen, geneigten Flächen auf, die eine entgegen der Anströmrichtung gerichtete Schneide bilden.

Ein angeströmtes Bauteil von Flugkörpern, insbesondere Flügel und Leitwerke von Flugzeugen, weist eine Stützkonstruktion auf, die eine gemäß einer vorbestimmten Außenkontur gestaltete Profilhaut trägt. Die Profilhaut folgt im Anström- bzw. Nasenbereich nicht der Außenkontur, sondern läuft zur Anströmkante spitz zu. Zur Bildung der vorbestimmten Außenkontur ist die Profilhaut im Anström-bzw. Nasenbereich von einer Außenhaut überspannt. Die Außenhaut ist als abnehmbares Verkleidungsteil ausgebildet und kann infolge eines Aufpralls eines Vogels zerstört werden. Die Profilhaut weist im Anströmbereich die Form von zwei ebenen, geneigten Flächen auf, die eine entgegen der Anströmrichtung gerichtete Schneide bilden.

## Ansprüche

1. Angeströmtes Bauteil von Flugkörpern, insbesondere Flügel oder Leitwerke eines Flugzeugs, mit einer Stützkonstruktion, die eine gemäß einer vorbestimmten Außenkontur gestaltete Profilhaut trägt,

dadurch gekennzeichnet, daß die Profilhaut (30) im Anströmbereich des Bauteils (10) zur Anströmkante (10A) spitz zuläuft und von einer Außenhaut (40) überspannt ist.

2. Bauteil nach Anspruch 1, dadurch gekennzeichnet, daß die Profilhaut (30) im Anströmbereich von zwei ebenen Flächen (30B) gebildet ist.

3. Bauteil nach Anspruch 2, dadurch gekennzeichnet, daß die beiden ebenen Flächen (30B) eine Schneide (30A) bilden.

4. Bauteil nach einem der Ansprüche 1 bis 3, dadurch gekennzeichnet, daß die Außenhaut (40) als abnehmbares Verkleidungsteil ausgebildet ist.

5. Bauteil nach einem der Ansprüche 1 bis 4, dadurch gekennzeichnet, daß die Außenhaut (40) infolge eines Aufpralls eines Vogels zerstörbar ist.

6. Bauteil nach einem der Ansprüche 1 bis 5, dadurch gekennzeichnet, daß die Außenhaut (40) ausgesteift ist.

7. Bauteil nach einem der Ansprüche 1 bis 6, dadurch gekennzeichnet, daß die Außenhaut (40) und oder die Profilhaut (30) aus einem Kunststoff besteht.

8. Bauteil nach einem der Ansprüche 1 bis 7, dadurch gekennzeichnet, daß die Außenhaut (40) und oder die Profilhaut (30) aus einem Metall besteht.

FIG. 1

FIG. 2

FIG. 3

FIG. 4

FIG. 5